# EUROPEAN PATENT APPLICATION

(11) **EP 3 115 622 A1**
(43) Date of publication of application: **11.01.2017**
(21) Application number: 16178733.8
(22) Date of filing: 08.07.2016
(51) Int. Cl.: F16B 5/02, F16B 35/04

(54) **DEVICE AND METHOD FOR CONNECTING FRAME ELEMENTS**

(30) Priority: 10.07.2015 IT UB20152057
(71) Applicant: Ferro Immobiliare S.r.l., 33035 Martignacco (UD) (IT)
(72) Inventor: Ferro, Vittorino, 33035 Martignacco (UD) (IT)
(74) Representative: Petraz, Gilberto Luigi

(57) **Abstract**

Device for connecting frame elements (15A, 15B, 19A, 19B) able to obtain frameworks (30, 30') for panelwork, furniture, fixtures, doors, windows or suchlike, comprising: at least one pin (11) provided with a right-handed thread (D) and a left-handed thread (S) self-threading and positioned specular to a plane (V) of symmetry; and at least one polygonal tightening seating (12, 12A, 12B) recessed in at least one of the two ends the pin (11) free of said right-handed thread (D) and said left-handed thread (S).

## Description

### FIELD OF THE INVENTION

The present invention concerns a device and a method for connecting frame elements that can be used both in the furnishing sector to make furniture and also in the building sector to obtain fixtures, doors, windows or suchlike. For example the present connection device and method can be used to connect frame elements such as cross-pieces and uprights, to form frames comprising a plurality of frame elements joined to each other.

The present invention also concerns a framework, or part of a framework, obtained by joining one or more frame elements connected using the present connection device and method.

By the term framework we also mean a panelwork or the frame of a piece of furniture formed by several framework or frame elements joined to each other.

### BACKGROUND OF THE INVENTION

It is known that there are various types of frameworks usable in particular in the field of furnishing or in the building trade to make fixtures, doors or windows or suchlike. Such frameworks can be made using elements that can be made of different materials, for example wood, metal materials such as aluminum, PVC or other, but also combinations of such materials, for example wood-aluminum systems, or also other composite materials, for example wood fiber with polymer materials or others. For example, in the case of wooden elements, the wood can be of various types of consistency and compactness, for example wood chip can be used, or wood with medium density fiber, that is, the so-called M.D.F., or a wood with greater or lesser hardness, for example teak, which has a certain hardness, or fir, which is softer.

The elements used to form the framework are generally rod-shaped, with a quadrangular or rounded section, and provide ends cut at 90° or 45°, or at intermediate angles between these two, so that they can be brought together and joined so as to form frameworks with elements disposed, for example, at a right angle with respect to each other, for example with L-shaped or T-shaped configurations, or other geometric shapes.

Such elements, let us suppose wooden elements for example, can be joined in various ways. A first way to connect such elements to form for example the edge of an L-shaped profile is by gluing. This type of connection has the disadvantage that it is practically irreversible, and can also be applied firmly only if wooden elements are used, but it is difficult to use this method effectively for joining together elements other than wooden ones.

Other types of connection are obtained for example by inserts or joints or dovetail inserts. In this case too, this type of connection can be used only for wooden elements, it is practically irreversible and, in the case where dove tail joints are used, there is a risk that the connection zones can swell and alter if the wood were to get wet.

Other types of connection, usable in this case also with materials other than wood, can use screws, squares or other attachment means. In these cases, as can easily be understood, to attach two elements that will form a framework, or part of it, requires to use several tools and several attachment elements, for example screws, squares or others.

One known connection device for frame elements is described for example in document DE-A-10301044. This connection device has limits from the point of view of tightening efficiency, due for example to the disposition and type of the tightening seating.

There is therefore a need to perfect a connection device for frame elements that can overcome at least one of the disadvantages of the state of the art.

In particular, one purpose of the present invention is to obtain a connection device for frame elements such as elements for furniture, panelworks, fixtures, doors and windows or suchlike, which is effective, is the mechanical type and is reversible, whatever the material used to make the elements, which can therefore be wooden elements, plastic materials or metal or any combination or composition thereof, therefore also having different properties of compactness, hardness and consistency.

Another purpose of the present invention is to obtain a connection device for frame elements such as elements for furniture, panelworks, fixtures, doors and windows or suchlike by means of which the mechanical and reversible connection is obtained with a minimum number of accessories necessary for the connection, that is to say, substantially a pin and a specific tightening tool, normally available on the market.

Another purpose of the present invention is to obtain a connection device for frame elements such as elements for furniture, panelworks, fixtures, doors and windows or suchlike which has a considerable mechanical grip, substantially invisible from the outside once the joining of the elements that make up the framework is completed.

Another purpose of the present invention is to obtain a connection device for frame elements such as elements for furniture, panelworks, fixtures, doors and windows or suchlike which has effective tightening seatings, suitably positioned in the connection device, so as to guarantee an effective tightening of the frame elements or suchlike.

Another purpose of the present invention is to perfect a connection method by means of which, with a single pin and a single screwing operation, at least two elements able to form a framework for fixtures, doors and windows or suchlike can be joined together.

Another purpose of the present invention is to obtain a framework in which two frame elements are joined to each other effectively and reversibly by means of a single pin which, when the joint is completed, is preferably concealed.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, and according to a first aspect of the invention, a device for connecting frame elements able to obtain frameworks for panelwork, furniture, fixtures, doors, windows or suchlike, is characterized in that it comprises: at least one pin provided with a right-handed thread and a left-handed thread, self-threading and positioned specular to a plane of symmetry; and at least one polygonal tightening seating recessed in at least one of the two ends of the pin, free of the right-handed thread and the left-handed thread.

The connection device is particularly effective if the polygonal tightening seating is made in a 6-point star shape, that is, similar to the screw head known by the commercial name "Torx".

In accordance with possible embodiments, the tightening seating is configured to engage with a corresponding tightening tool so that, following the positioning of the pin between two opposite joining sides of the frame elements and following the screwing of the pin by means of the tightening tool, the right-handed and left-handed threads are simultaneously inserted inside the opposite joining sides of the two frame elements, possibly previously holed, so as to bring them reciprocally and simultaneously closer until they are completely joined.

Advantageously, by means of the present connection device, it is possible to obtain a join of two frame elements that is efficient and completely reversible, whatever material the frame elements are made of, for example wood, plastic or metal, or composite materials or other. This join is substantially obtained by means of a single pin, which furthermore, when the frame elements are completely joined, is also positioned concealed inside the frame elements, in order to maintain accessibility to the corresponding tightening seating.

Advantageously, the present connection device can be used to join frameworks such as panelworks made from woods of different types and thickness, for example chipboard, multi-layered or other, or from different materials.

Preferably, the right-handed and left-handed threads are specular to a plane orthogonal to a longitudinal axis of the pin.

At least one of the right-handed or left-handed threads can also comprise an additional thread made in proximity to the end of the pin.

The right-handed and left-handed threads are advantageously self-threading, so that the present device can be used in particular for joining frame elements of various hardness, for example wood, chipboard or M.E.D.

Another aspect of the present invention concerns a method for connecting frame elements to obtain frameworks for fixtures, doors, windows or suchlike, characterized in that it comprises the following steps: positioning a pin with at least a right-handed thread and at least a left-handed thread self-threading between two joining sides of two frame elements to be joined; screwing the pin by means of at least a polygonal tightening seating recessed in at least one of the two ends of the pin in such a manner that the right-handed thread is inserted inside one joining side of one of the frame elements and the left-handed thread is inserted inside the other joining side of the other frame element, so that the two frame elements are brought reciprocally closer at the same time.

In accordance with possible embodiments, screwing the pin, the left-handed thread is inserted, simultaneously with the right-handed thread, inside the other joining side of the other frame element, so that the two frame elements are brought reciprocally and also simultaneously closer.

The present invention also concerns a framework comprising a plurality of frame elements joined together. According to a characteristic aspect of the invention the framework comprises a device for connecting the frame elements provided with at least one pin having at least a right-handed thread self-threading and configured to engage in a joining side of one of the frame elements, at least a left-handed thread self-threading and configured to engage in a joining side of the other frame element, and at least one polygonal tightening seating recessed in at least one of the two ends of the pin free of the right-handed thread and the left-handed thread.

According to another aspect of the invention, in at least one of the frame elements, a through hole is made, able to accommodate a tightening tool configured to engage with the tightening seating.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1a shows a first perspective view of a connection device for frame elements such as panelwork, furniture, fixtures, doors and windows or suchlike according to a first executive form of the present invention;
- fig. 1b shows a second perspective view of the connection device of fig. 1a;
- fig. 1c shows a view in lateral elevation of the connection device of the previous drawings;
- fig. 1d shows a front view of the connection device of the previous drawings;
- fig. 2a shows a perspective view of two frame elements with an end shaped at 45° and able to be joined together to form a framework by means of a connection device according to the present invention;
- fig. 2b shows a perspective view of the two frame elements of fig. 2a closer and completely connected;
- fig. 3 shows a perspective view of an edge of a framework obtained by means of the two frame elements of figs. 2a and 2b;
- fig. 4 shows a plan view of two frame elements with an end shaped at 90° and joined with the present connection device, that can be used for the construction of a panelwork;
- fig. 5a shows a perspective view of a first executive variant of the present connection device;
- fig. 5b shows a view in lateral elevation of the first executive variant of fig. 5a;
- fig. 6a shows a perspective view of a second executive variant of the present connection device;
- fig. 6b shows a view in lateral elevation of the second executive variant of fig. 6a;
- fig. 7a shows a perspective view of a third executive variant of the present connection device;
- fig. 7b shows a view in lateral elevation of the third executive variant of fig. 7a.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawing. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

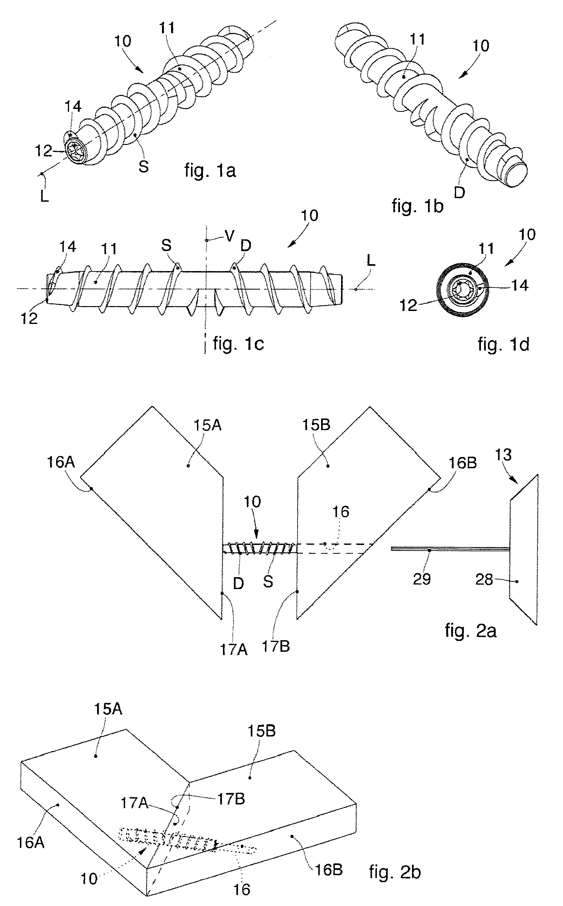

With reference to the attached drawings and in particular figs. 1a, 1b, 1c and 1d, the reference number 10 indicates a connection device for framework elements such as fixtures, doors and windows or suchlike. The connection device 10 comprises a pin 11, for example cylindrical in shape, comprising a right-handed thread D and a left-handed thread S. The pin 11 is made of steel for example, and the right-handed thread D and left-handed thread S can be made on the pin 11 using any known work mode, for example with a rolling machine.

Preferably, the two threads, right-handed and left-handed D and S have the same pitch between the coils of which they consist, and are substantially symmetrical with respect to a vertical plane V which preferably passes through the center of the pin 11 and is preferably orthogonal to the longitudinal axis L of the pin 11.

The pin 11 comprises at at least one of its ends a seating 12 for inserting a tightening tool 13 (fig. 2a). The seating 12 is preferably polygonal and can be conformed for example with several points, for example six points, as in the screw head known with the commercial name "Torx". The tightening tool 13 will be provided with a rod 29, with a shape corresponding to that of the seating 12.

The tightening seating 12 could also be made with a different shape, for example hexagonal, star-shaped or other, with a consequent variation in the shape of the rod 29 of the tool 13.

The tightening tool 13 engaged in the seating 12 is therefore able to allow a rotation of the pin 11 of the connection device 10 around its longitudinal axis L.

The threading of the pin 11 made on the side where the seating 12 is made for the screwing tool 13, in this case the left-handed thread S, has an additional thread 14 with respect to the other thread, in this case the right-handed thread D. The additional thread 14 is pointed to make a first threaded hole as a lead-in if the frame elements to be joined by the present connection device are made of particularly hard wood, for example teak.

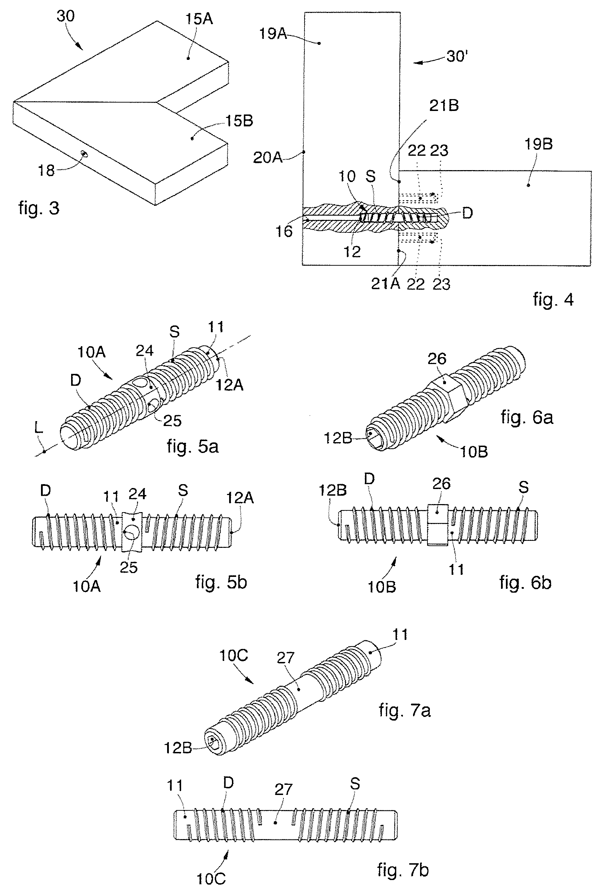

Fig. 2a shows two frame elements 15A and 15B with an end shaped at 45° and able to be joined to form an L-shaped edge of a framework 30 (fig. 3) of a fixture, doors and windows or suchlike.

In one of the two elements of the frame, for example element 15B, a through hole 16 is made, which passes through frame element 15B from a first side 16B where the tightening tool 13 is introduced, to a second joining side 17B. The second side 17B is able to fit with a side 17A of the frame element 15A. The tightening tool 13 comprises a handle 28 and a rod 29, preferably made of steel, having a shaped head so as to correspond with the seating 12 of the connection device.

Supposing that frame elements 15A and 15B are made of chip or medium density wood M.D.F. for example, in order to make a reciprocal connection it is enough to insert the connection device 10 between them, as shown in fig. 2a, so that the tightening seating 12 is located at the end of the through hole 16 situated on the joining side of the frame element where the through hole 16 is made, in this case the joining side 17B of the frame element 15B. In this embodiment of the connection device 10, the two right-handed and left-handed threads D and S are self-threading, therefore the rod 29 of the tool is inserted inside the through hole 16 so that the head of the rod engages with the tightening seating 12 made at the end of the pin 11 of the connection device 10. Using the handle 28, the tightening tool 13 is rotated in one direction, clockwise or anti-clockwise, so that the two threads right-handed and left-handed D and S simultaneously penetrate inside respectively the frame elements 15A and 15B, making way in the wood and therefore obtaining the counter-threading inside the frame elements 15A and 15B.

The tightening of the two frame elements 15A and 15B continues until the two joining sides 17A and 17B of the two elements 15A and 15B fit together and are in contact, as shown in fig. 2b.

At this point the tightening tool 13 can be removed from the through hole 16 and the end of the through hole 16 facing toward the external side 16B of the join element 15B can be closed by a stopper 18.

Advantageously, when the two frame elements 15A and 15B are joined, the connection device 10 is positioned concealed between the two elements 15A and 15B, and the only element visible outside is the stopper 18 (see fig. 3). The elements 15A and 15B joined together therefore form an edge that is part of the framework 30.

The joining process described above is also completely reversible, since after the stopper 18 has been removed, it is possible to again introduce the tool 13 so that it engages again in the seating 12 of the connection device 10. By rotating the pin 11 of the connection device 10 in the opposite direction to the tightening direction, the two frame elements 15A and 15B will simultaneously be distanced from each other, until the connection device 10 is completely visible again, as in fig. 2a.

The frame elements 15A and 15B could be made of hard wood, for example teak. In this case it is possible to make a first screwing or partial screwing on one of the two frame elements, using the part of the connection device 10 with the additional thread 14. Having made the first counter-threaded partial thread on one of the two frame elements, the connection device 10 is positioned as shown in fig. 2a. in this case, on one side, for example on frame element 15B, there is already the counter-threaded partial thread communicating with the through hole 16, so that when the connection device 10 is pointed also on the other frame element 15A, the effort to be made to tighten the two elements 15A and 15B using the tool 13 is substantially halved.

The additional thread 14, possibly made at the free end of at least one of the two threads D or S therefore has the function of creating a first partial and counter-threaded thread useful for the subsequent joining step of the frame elements 15A and 15B. The additional thread 14 could also be made at both ends of the connection device 10, therefore at both the free ends of the right-handed and left-handed threads D and S, or could be made on the opposite end to that where the tightening seating 12 is made.

The connection device 10 for frame elements could also be used, as we said, on materials other than wood, also plastic materials, metals or various composite materials.

In this case, in the frame elements to be joined, for example frame elements 15A and 15B as described above, it will first be necessary to make the appropriate counter-threads and the connection device 10 will in this case be provided with metric right-handed and left-handed threads D and S. The two frame elements 15A and 15B would be joined exactly as described with reference to fig. 2a, but with the difference that, during screwing with tool 13, the metric threads D and S would engage in corresponding counter-threads made in frame elements 15A and 15B.

In this case too, advantageously, the connection of the two frame elements 15A and 15B would remain concealed as in fig. 3 and completely reversible.

Fig. 4 shows a variant of two frame elements by means of which it is possible to make an L-shaped edge of a framework 30'. The two elements 19A and 19B in this example are normal parallelepipeds with edges shaped at 90°. In this case too, on one of the two frame elements, for example frame element 19A, the through hole 16 is made, which passes through the element 19A from an external side 20A to a joining side 21A, which is in contact, when the join is complete, with the joining side 21B of connection element 19B. The operation to join the two elements 19A and 19B is made exactly as described with reference to fig. 2a.

The framework 30', like framework 30, could be part of a piece of furniture or panelwork and the elements 15A, 15B or 19A and 19B could have different thicknesses.

The joins that can be made using the connection device 10 could also be used to join elements that provide joining angles different from angles of 45° and 90° shown by way of example, for example intermediate angles between 45° and 90°.

In addition to the connection device 10 normal pins 22 could be provided, which can assist the correct positioning of the two frame elements 19A and 19B. Fig. 4 shows by way of example two pins 22 made on the joining side 21A of the element 19A and inserted in corresponding holes 23 made on frame element 19B starting from its joining side 21B.

As can be understood, by means of the frame elements 19A and 19B, it would also be possible to make T-shaped framework parts. For example, if we imagine that the join element 19A extends downward, observing fig. 4, beyond the other join element 19B.

Figs. 5a and 5b show a first variant of the connection device according to the invention. In this variant the connection device 10a comprises a pin 11 again provided with a right-handed thread D and a left-handed thread S and, in a central zone, with a ring 24 positioned between the two threads right-handed D and left-handed S. A plurality of radial seatings 25 are made in the ring 24, suitably shaped and able to accommodate the head of the tightening tool 13.

In this case too, therefore, the connection device 10A would be positioned as in fig. 2a. For tightening, a tool would therefore be used that acts on the ring 24 so as to rotate it around its longitudinal axis L and bring together the two elements 15A and 15B, or elements 19A and 19B. The complete join is such that the two sides 17A and 17B, or 21A and 21B, are in contact with each other; the join is then concluded using the tool 13 which acts on the seating 12A made on one of the two ends of the pin 11 of the connection device 10A.

In the variant shown in figs. 6a and 6b, the connection device 10B comprises not only the pin 11 and the right-handed and left-handed threads D and S, but also a central tightening nut 26 and a seating 12B, hexagonal for example, able to be engaged by the tightening tool 13. Therefore, as we said above, a first tightening step can take place by rotating the pin 11, effected by a tool cooperating with the central nut 26, whereas the bringing together and final contact is obtained by means of the tool 13.

In these two variants with ring 24 or central nut 26, housing seatings will preferably be made for the ring 24 and the nut 26 on sides 17A and 17B or 19A and 19B of elements 15A and 15B or 19A and 19B destined to come into contact.

Figs. 7a and 7b show a variant device 10C with tightening seating 12B, hexagonal in shape, and a central zone 27, smooth or knurled, used to allow the device 10C to rotate.

It is clear that modifications and/or additions of parts may be made to the connection device for frame elements as described heretofore, without departing from the field and scope of the present invention.

It is therefore clear that, although the present invention has been described with reference to some specific examples, a person of skill in the art shall certainly be able to achieve many other equivalent forms of connection device for frame elements, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Device for connecting frame elements (15A, 15B, 19A, 19B) able to obtain frameworks (30, 30') for panelwork, furniture, fixtures, doors, windows or suchlike, **characterized in that** it comprises: at least one pin (11) provided with a right-handed thread (D) and a left-handed thread (S), self-threading and positioned specular to a plane (V) of symmetry; and at least one polygonal tightening seating (12, 12A, 12B) recessed in at least one of the two ends of the pin (11) free of said right-handed thread (D) and said left-handed thread (S).

2. Device as in claim 1, **characterized in that** said polygonal tightening seating (12, 12A, 12B) is a seating with a 6-point star shape.

3. Device as in claim 1 or 2, **characterized in that** said tightening seating (12, 12A, 12B) is configured to engage with a corresponding tightening tool (13) so that, following the positioning of said pin (11) between two opposite joining sides (17A, 17B, 21A, 21B) of said frame elements (15A, 15B, 19A, 19B) and following the screwing of the pin (11) by means of said tightening tool (13), said right-handed and left-handed threads (D, S) are simultaneously inserted inside said opposite joining sides (17A, 17B, 21A, 21B) of the two frame elements (15A, 15B, 19A, 19B) so as to bring them reciprocally and simultaneously closer until they are completely joined.

4. Device as in claim hereinbefore, **characterized in that** it comprises another tightening seating (25, 26) made in a central zone of the pin (11).

5. Device as in any claim hereinbefore, **characterized in that** said right-handed and left-handed threads (D, S) are specular to a plane (V) orthogonal to a longitudinal axis (L) of the pin (11).

6. Device as in any claim hereinbefore, **characterized in that** at least one of said right-handed or left-handed threads (D, S) comprises an additional thread (14) made in proximity to the end of the pin (11).

7. Method for connecting frame elements to obtain frameworks for fixtures, doors, windows or suchlike, **characterized in that** it comprises the following steps: positioning a pin (11) with at least a right-handed thread (D) and at least a left-handed thread (S) self-threading between two joining sides (17A, 17B, 21A, 21B) of two frame elements (15A, 15B, 19A, 19B) to be joined; screwing the pin (11) by means of at least one polygonal tightening seating (12, 12A, 12B) recessed in at least one of the two ends of the pin (11) in such a manner that the right-handed thread (D) is inserted inside one joining side (17A, 21B) of one of the frame elements (15A, 19B) and the left-handed thread (S) is inserted inside the other joining side (17B, 21A) of the other frame element (15B, 19A), so that said two frame elements (15A, 15B, 19A, 19B) are brought reciprocally closer.

8. Method as in claim 7, **characterized in that,** screwing the pin (11), the left-handed thread (S) is inserted, simultaneously with the right-handed thread (D), inside the other joining side (17B, 21A) of the other frame element (15B, 19A), so that said two frame elements (15A, 15B, 19A, 19B) are brought reciprocally and also simultaneously closer.

9. Framework comprising a plurality of frame elements (15A, 15B, 19A, 19B) joined together, **characterized in that** it comprises a device (10, 10A, 10B, 10C) for connecting said frame elements (15A, 15B, 19A, 19B) provided with at least one pin (11) having at least a right-handed thread (D) self-threading and configured to engage in a joining side (17A, 21B) of one of the frame elements (15A, 19B), at least a left-handed thread (S) self-threading and configured to engage in a joining side (17B, 21A) of the other frame element (15B, 19A), and at least one polygonal tightening seating (12, 12A, 12B) recessed in at least one of the two ends of the pin (11) free of said right-handed thread (D) and said left-handed thread (S).

10. Framework as in claim 9, **characterized in that** in at least one of said frame elements (15A, 15B, 19A, 19B), a through hole (16) is made, able to accommodate a tightening tool (13) configured to engage with said tightening seating (12, 12A, 12B).
